(19) Europäisches Patentamt
European Patent Office
Office européen des brevets

(11) EP 3 732 967 A1

(12) EUROPEAN PATENT APPLICATION
published in accordance with Art. 153(4) EPC

(43) Date of publication:
04.11.2020 Bulletin 2020/45

(21) Application number: 18894679.2

(22) Date of filing: 25.12.2018

(51) Int Cl.:
A01N 43/90 (2006.01) A01M 1/20 (2006.01)
A01N 37/18 (2006.01) A01N 47/16 (2006.01)
A01P 7/02 (2006.01) A01P 7/04 (2006.01)
C07D 471/04 (2006.01)

(86) International application number:
PCT/JP2018/047431

(87) International publication number:
WO 2019/131576 (04.07.2019 Gazette 2019/27)

(84) Designated Contracting States:
AL AT BE BG CH CY CZ DE DK EE ES FI FR GB GR HR HU IE IS IT LI LT LU LV MC MK MT NL NO PL PT RO RS SE SI SK SM TR
Designated Extension States:
BA ME
Designated Validation States:
KH MA MD TN

(30) Priority: 26.12.2017 JP 2017249089

(71) Applicant: SUMITOMO CHEMICAL COMPANY LIMITED
Chuo-ku
Tokyo 104-8260 (JP)

(72) Inventor: OKUDA, Ayako
Takarazuka-shi, Hyogo 665-8555 (JP)

(74) Representative: Nieuwenhuys, William Francis
Marks & Clerk LLP
15 Fetter Lane
London EC4A 1BW (GB)

# (54) PEST CONTROL COMPOSITION AND USE OF SAME

(57) The present invention provides a pest control composition and a method for controlling pests. Also the present invention provides a pest control composition comprising a compound represented by formula (1): [wherein $R^1$ represents a hydrogen atom and the like, $R^2$ represents a C1-C3 alkyl group, $R^3$ and $R^4$ are identical to or different from each other and each represents a hydrogen atom and the like, n is 0 and the like, and m is 0 and the like.] or its N-oxide and at least one compound selected from the group of N,N-diethyl-m-toluamide and sec-butyl = 2-(2-hydroxyethyl)piperidine-1-carboxylate.

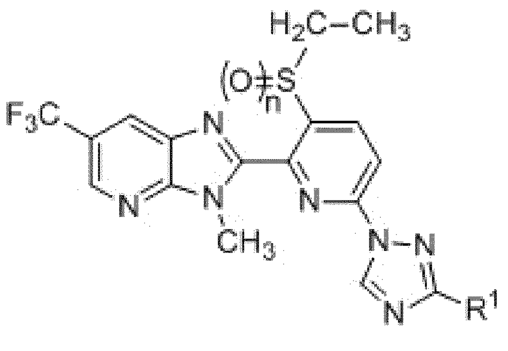

(1)

EP 3 732 967 A1

## Description

TECHNICAL FIELD

This application claims priority to and the benefit of Japanese Patent Application No. 2017-249089 filed December 26, 2017, the entire contents of which are incorporated herein by reference.
The present invention is related to a composition for controlling pests and a method for controlling pests.

BACKGROUND ART

Hitherto, many compounds have been known as an active ingredient for a composition for controlling pests (see Patent Documents 1 and 2). In particular, a class of fused heterocyclic compounds have been known (see Patent Document 2) .

CITATION LIST

PATENT DOCUMENT

Patent Document 1: WO 2015 / 198859 pamphlet
Patent Document 2: WO 2015 / 133603 pamphlet

SUMMARY OF THE INVENTION

(PROBLEMS TO BE SOLVED BY INVENTION)

An object of the present invention is to provide composition for controlling pests having an excellent control efficacy on pests.

(MEANS TO SOLVE PROBLEMS)

The present inventor has intensively studied to find out a composition for controlling pests having an excellent control efficacy on pests. As a result, he has found that a composition comprising a compound represented by the below-mentioned formula (1), and at least one compound selected from a group consisting of N,N-diethyl-m-toluamide and sec-butyl = 2-(2-hydroxyethyl)piperidine-1-carboxylate has an excellent control efficacy on pests.
That is, the present invention is as follows.

[1] A composition for controlling pests comprising
a compound represented by formula (1):

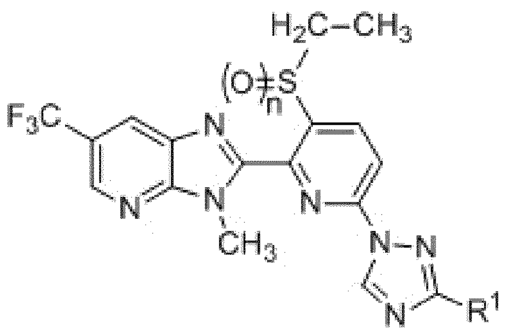

(1)

[wherein

$R^1$ represents a hydrogen atom, a C1-C3 alkyl group which may optionally have one or more halogens, a halogen atom, a C1-C3 alkoxy group, a C2-C4 alkoxycarbonyl group, $S(O)_mR^2$, $NR^3R^4$, a nitro group, or a cyano group,

$R^2$ represents a C1-C3 alkyl group,
$R^3$ and $R^4$ are identical to or different from each other and each represents a hydrogen atom or a C1-C3 alkyl group,
n is 0, 1 or 2, and
m is 0, 1 or 2.]

or its N-oxide (hereinafter, the compound represented by formula (1) and its n-oxide are referred to as "Present compound") and
at least one compound selected from the group of N,N-diethyl-m-toluamide and sec-butyl = 2-(2-hydroxyethyl)piperidine-1-carboxylate
(hereinafter, referred to as "Present composition" or "Composition of the present invention").
[2] The composition according to [1] wherein $R^1$ represents a hydrogen atom, a C1-C3 alkyl group, a halogen atom, a C1-C3 alkoxy group, or $NR^3R^4$, and n is 2.
[3] The composition according to [1] wherein $R^1$ represents a hydrogen atom, a methyl group, a chlorine atom, a methoxy group, or an amino group, and n is 2.
[4] The composition according to [1] wherein the content ratio of the compound represented by formula (1) and its N-oxide to at least one compound selected from N,N-diethyl-m-toluamide and sec-butyl = 2-(2-hydroxyethyl)piperidine-1-carboxylate is 100 : 1 to 1 : 100 by weight.
[5] A method for controlling pests which comprises applying an effective amount of the composition according to [4] to a pest or a habitat where a pest lives.

[EFFECT OF INVENTION]

The present invention can control pests.

MODE FOR CARRYING OUT THE INVENTION

N,N-diethyl-m-toluamide and sec-butyl = 2-(2-hydroxyethyl)piperidine-1-carboxylate are commonly known compounds, and are commercially available. N,N-diethyl-m-toluamide and / or sec-butyl = 2-(2-hydroxyethyl)piperidine-1-carboxylate are sometimes described as "Present ingredient".
The present compound is the compound described in, for example, WO 2015 / 133603 A1, and may be prepared according to the method described therein.
In the present compound, examples of N-oxide include a compound represented by formula (1-1).

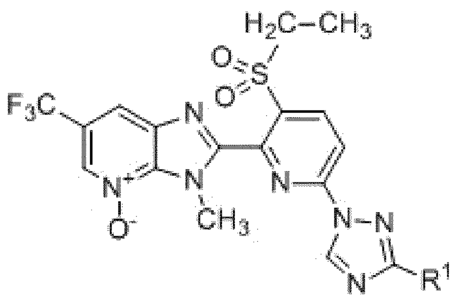

(1-1)

[wherein the symbols are the same as those of the formula (1).]
The substituents as used herein are explained.
In the present compound, "halogen atom" represents fluorine atom, chlorine atom, bromine atom, and iodine atom. When the substituent has two or more halogen atoms, these halogen atoms may be identical to or different from each other.
In the present compound, examples of "C1-C3 alkyl group" include methyl group, ethyl group, propyl group, and isopropyl group.
In the present compound, examples of "C1-C3 haloalkyl group" include fluoromethyl group, chloromethyl group, bromomethyl group, iodomethyl group, difluoromethyl group, dichloromethyl group, trifluoromethyl group, chlorodifluoromethyl group, bromodifluoromethyl group, trichloromethyl group, 2-fluoroethyl group, 2-chloroethyl group, 2-bromoethyl group, 2,2-difluoroethyl group, 2,2,2-trifuoroethyl group, pentafluoroethyl group, heptafluoropropyl group, and heptafluoroisopropyl group.
In the present compound, examples of "C1-C3 alkoxy group" include methoxy group, ethoxy group, propyloxy

group, and isopropyloxy group.

In the present compound, examples of "C1-C3 alkylamino group" include methylamino group, ethylamino group, propylamino group, and isopropylamino group.

In the present compound, examples of "di(C1-C3 alkyl)amino group" include N,N-dimethylamino group, N,N-diethylamino group, N,N-dipropylamino group, N,N-diisopropylamino group, N-methyl-N-ethylamino group, N-methyl-N-propylamino group, N-methyl-N-isopropylamino group, N-ethyl-N-propylamino group, and N-ethyl-N-isopropylamino group.

In the present compound, "C2-C4 alkoxycarbonyl group" represents a group wherein the C1-C3 alkoxy group is attached to the carbonyl group, and examples thereof include methoxycarbonyl group, ethoxycarbonyl group, propoxycarbonyl group, and isopropoxycarbonyl group.

In the present compound, "S(O)m$R_2$" represents a C1-C3 alkylsulfanyl group when m is 0, a C1-C3 alkylsulfinyl group when m is 1, and a C1-C3 alkylsulfonyl group when m is 2.

Examples of the C1-C3 alkylsulfanyl group include methylsulfanyl group, ethylsulfanyl group, propylsulfanyl group, and isopropylsulfanyl group.

Examples of the C1-C3 alkylsulfinyl group include methylsulfinyl group, ethylsulfinyl group, propylsulfinyl group, and isopropylsulfinyl group.

Examples of the C1-C3 alkylsulfonyl group include methylsulfonyl group, ethylsulfonyl group, propylsulfonyl group, and isopropylsulfonyl group.

Next, specific examples of the present compound are shown below.

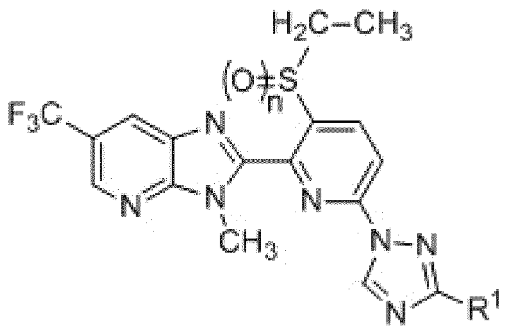

(1)

The present compound represented by formula (1) wherein n and $R^1$ represents any combinations indicated in [Table 1] to [Table 3].

[Table 1]

| Present compound | $R^1$ | n |
|---|---|---|
| 1 | H | 0 |
| 2 | H | 1 |
| 3 | H | 2 |
| 4 | F | 0 |
| 5 | F | 1 |
| 6 | F | 2 |
| 7 | Cl | 0 |
| 8 | Cl | 1 |
| 9 | Cl | 2 |
| 10 | Br | 0 |
| 11 | Br | 1 |
| 12 | Br | 2 |
| 13 | I | 0 |
| 14 | I | 1 |
| 15 | I | 2 |
| 16 | $CH_3$ | 0 |
| 17 | $CH_3$ | 1 |
| 18 | $CH_3$ | 2 |
| 19 | $CH_2CH_3$ | 0 |
| 20 | $CH_2CH_3$ | 1 |
| 21 | $CH_2CH_3$ | 2 |
| 22 | $CH_2CH_2CH_3$ | 0 |
| 23 | $CH_2CH_2CH_3$ | 1 |
| 24 | $CH_2CH_2CH_3$ | 2 |
| 25 | $CH(CH_3)_2$ | 0 |
| 26 | $CH(CH_3)_2$ | 1 |
| 27 | $CH(CH_3)_2$ | 2 |

| Present compound | $R^1$ | n |
|---|---|---|
| 28 | $CF_3$ | 0 |
| 29 | $CF_3$ | 1 |
| 30 | $CF_3$ | 2 |
| 31 | $CF_2CF_3$ | 0 |
| 32 | $CF_2CF_3$ | 1 |
| 33 | $CF_2CF_3$ | 2 |
| 34 | $CF_2CF_2CF_3$ | 0 |
| 35 | $CF_2CF_2CF_3$ | 1 |
| 36 | $CF_2CF_2CF_3$ | 2 |
| 37 | $CF(CF_3)_2$ | 0 |
| 38 | $CF(CF_3)_2$ | 1 |
| 39 | $CF(CF_3)_2$ | 2 |
| 40 | $CH_2CF_3$ | 0 |
| 41 | $CH_2CF_3$ | 1 |
| 42 | $CH_2CF_3$ | 2 |
| 43 | $OCH_3$ | 0 |
| 44 | $OCH_3$ | 1 |
| 45 | $OCH_3$ | 2 |
| 46 | $OCH_2CH_3$ | 0 |
| 47 | $OCH_2CH_3$ | 1 |
| 48 | $OCH_2CH_3$ | 2 |
| 49 | $OCH_2CH_2CH_3$ | 0 |
| 50 | $OCH_2CH_2CH_3$ | 1 |
| 51 | $OCH_2CH_2CH_3$ | 2 |
| 52 | $OCH(CH_3)_2$ | 0 |
| 53 | $OCH(CH_3)_2$ | 1 |
| 54 | $OCH(CH_3)_2$ | 2 |

[Table 2]

| Present compound | $R^1$ | n |
|---|---|---|
| 55 | $SCH_3$ | 0 |
| 56 | $SCH_3$ | 1 |
| 57 | $SCH_3$ | 2 |
| 58 | $SCH_2CH_3$ | 0 |
| 59 | $SCH_2CH_3$ | 1 |
| 60 | $SCH_2CH_3$ | 2 |
| 61 | $SCH_2CH_2CH_3$ | 0 |
| 62 | $SCH_2CH_2CH_3$ | 1 |
| 63 | $SCH_2CH_2CH_3$ | 2 |
| 64 | $SCH(CH_3)_2$ | 0 |

(continued)

| Present compound | $R^1$ | n |
|---|---|---|
| 65 | $SCH(CH_3)_2$ | 1 |
| 66 | $SCH(CH_3)_2$ | 2 |
| 67 | $S(O)CH_3$ | 0 |
| 68 | $S(O)CH_3$ | 1 |
| 69 | $S(O)CH_3$ | 2 |
| 70 | $S(O)CH_2CH_3$ | 0 |
| 71 | $S(O)CH_2CH_3$ | 1 |
| 72 | $S(O)CH_2CH_3$ | 2 |
| 73 | $S(O)CH_2CH_2CH_3$ | 0 |
| 74 | $S(O)CH_2CH_2CH_3$ | 1 |
| 75 | $S(O)CH_2CH_2CH_3$ | 2 |
| 76 | $S(O)CH(CH_3)_2$ | 0 |
| 77 | $S(O)CH(CH_3)_2$ | 1 |
| 7 | $S(O)CH(CH_3)_2$ | 2 |
| 79 | $S(O)_2CH_3$ | 0 |
| 80 | $S(O)_2CH_3$ | 1 |
| 81 | $S(O)_2CH_3$ | 2 |
| 82 | $S(O)_2CH_2CH_3$ | 0 |
| 83 | $S(O)_2CH_2CH_3$ | 1 |
| 84 | $S(O)_2CH_2CH_3$ | 2 |
| 85 | $S(O)_2CH_2CH_2CH_3$ | 0 |
| 86 | $S(O)_2CH_2CH_2CH_3$ | 1 |
| 87 | $S(O)_2CH_2CH_2CH_3$ | 2 |
| 88 | $S(O)_2CH(CH_3)_2$ | 0 |
| 89 | $S(O)_2CH(CH_3)_2$ | 1 |
| 90 | $S(O)_2CH(CH_3)_2$ | 2 |
| 91 | $NH_2$ | 0 |
| 92 | $NH_2$ | 1 |
| 93 | $NH_2$ | 2 |
| 94 | $NHCH_3$ | 0 |
| 95 | $NHCH_3$ | 1 |
| 96 | $NHCH_3$ | 2 |
| 97 | $NHCH_2CH_3$ | 0 |
| 98 | $NHCH_2CH_3$ | 1 |
| 99 | $NHCH_2CH_3$ | 2 |
| 100 | $NHCH_2CH_2CH_3$ | 0 |
| 101 | $NHCH_2CH_2CH_3$ | 1 |
| 102 | $NHCH_2CH_2CH_3$ | 2 |

(continued)

| Present compound | $R^1$ | n |
|---|---|---|
| 103 | NHCH $(CH_3)_2$ | 0 |
| 104 | NHCH $(CH_3)_2$ | 1 |
| 105 | NHCH $(CH_3)_2$ | 2 |
| 106 | N $(CH_3)_2$ | 0 |
| 107 | N $(CH_3)_2$ | 1 |
| 108 | N $(CH_3)_2$ | 2 |

[Table 3]

| Present compound | $R^1$ | n |
|---|---|---|
| 109 | N $(CH_2CH_3)_2$ | 0 |
| 110 | N $(CH_2CH_3)_2$ | 1 |
| 111 | N $(CH_2CH_3)_2$ | 2 |
| 112 | N $(CH_2CH_2CH_3)_2$ | 0 |
| 113 | N $(CH_2CH_2CH_3)_2$ | 1 |
| 114 | N $(CH_2CH_2CH_3)_2$ | 2 |
| 115 | $N[CH(CH_3)_2]_2$ | 0 |
| 116 | N $[CH(CH_3)_2]_2$ | 1 |
| 117 | N $[CH(CH_3)_2]_2$ | 2 |
| 118 | $N(CH_3)CH_2CH_3$ | 0 |
| 119 | N $(CH_3)CH_2CH_3$ | 1 |
| 120 | N $(CH_3)CH_2CH_3$ | 2 |
| 121 | N $(CH_3)CH_2CH_2CH_3$ | 0 |
| 122 | N $(CH_3)CH_2CH_2CH_3$ | 1 |
| 123 | N $(CH_3)CH_2CH_2CH_3$ | 2 |
| 124 | N $(CH_3)CH(CH_3)_2$ | 0 |
| 125 | N $(CH_3)CH(CH_3)_2$ | 1 |
| 126 | N $(CH_3)CH(CH_3)_2$ | 2 |
| 127 | N $(CH_2CH_3)CH_2CH_2CH_3$ | 0 |
| 128 | N $(CH_2CH_3)CH_2CH_2CH_3$ | 1 |
| 129 | N $(CH_2CH_3)CH_2CH_2CH_3$ | 2 |
| 130 | N $(CH_2CH_3)CH(CH_3)_2$ | 0 |
| 131 | N $(CH_2CH_3)CH(CH_3)_2$ | 1 |
| 132 | N $(CH_2CH_3)CH(CH_3)_2$ | 2 |
| 133 | $C(O)OCH_3$ | 0 |
| 134 | $C(O)OCH_3$ | 1 |
| 135 | $C(O)OCH_3$ | 2 |
| 136 | $C(O)OCH_2CH_3$ | 0 |

(continued)

| Present compound | $R^1$ | n |
|---|---|---|
| 137 | $C(O)OCH_2CH_3$ | 1 |
| 138 | $C(O)OCH_2CH_3$ | 2 |
| 139 | $C(O)OCH_2CH_2CH_3$ | 0 |
| 140 | $C(O)OCH_2CH_2CH_3$ | 1 |
| 141 | $C(O)OCH_2CH_2CH_3$ | 2 |
| 142 | $C(O)OCH(CH_3)_2$ | 0 |
| 143 | $C(O)OCH(CH_3)_2$ | 1 |
| 144 | $C(O)OCH(CH_3)_2$ | 2 |
| 145 | $NO_2$ | 0 |
| 146 | $NO_2$ | 1 |
| 147 | $NO_2$ | 2 |
| 148 | CN | 0 |
| 149 | CN | 1 |
| 150 | CN | 2 |

The present composition may further contain one or more pest control agent, for example an insecticide, a miticide, or an antiparasitic agent.

Examples of the pest on which the present composition has control efficacies include, for example harmful arthropods such as harmful insects and harmful mites, but are not limited thereto. Specific examples of the harmful arthropod pest include, for example the followings:

Siphonaptera:

Pulex spp. such as human flea (Pulex irritans),
Ctenocephalides spp. such as cat flea (Ctenocephalides felis), and dog flea (Ctenocephalides canis),
Xenopsylla spp. such as oriental rat flea (Xenopsylla cheopis),
Tunga spp. such as chigoe flea (Tunga penetrans),
Echidnophaga spp. such as chicken flea (Echidnophaga gallinacea)), Nosopsyllus spp. such as European rat flea (Nosopsyllus fasciatus);
and the like.

Anoplura:

Pediculus spp. such as head louse (Pediculus humanus capitis), Phtirus spp. such as crab louse (Pthirus pubis),
Haematopinus spp. such as short-nosed cattle louse (Haematopinus eurysternus), and pig louse (Haematopinus suis),
Damalinia spp. such as Dalmalinia ovis, and Damalinia bovis, Linognathus spp. such as blue cattle louse (Linognathus vituli), and sheep face louse (Linognathus ovillus), Solenopotes spp. such as capillate louse (Solenopotes capillatus) ;
and the like.

Mallophagida:

Menopon spp. such as common chicken louse (Menopon gallinae), Trimenopon spp.,
Trinoton spp.,
Trichodectes spp. such as dog biting louse (Trichodectes canis), Felicola spp. such as cat louse (Felicola subrostratus),
Bovicola spp. such as cattle biting louse (Bovicola bovis), Menacanthus spp. such as chicken body louse

(Menacanthus stramineus), Werneckiella spp.,
Lepikentron spp.;
and the like.

Hemiptera:

Cimex spp. such as common bed bug (Cimex lectularius), and tropical bed bug (Cimex hemipterus),
Reduvius spp. such as Reduvius senilis,
Arilus spp. such as Arilus critatus,
Rhodnius spp. such as Rhodnius prolixus,
Triatoma spp. such as Triatoma rubrofasciata,
Panstrongylus spp.;
and the like.

Diptera:

Culex spp. such as southern house mosquito (Culex pipiens pallens), Culex tritaeniorhynchus, and brown house mosquito (Culex quinquefasciatus),
Aedes spp. such as dengue mosquito (Aedes aegypti), and Asian tiger mosquito (Aedes albopictus),
Anopheles spp. such as Chinese malaria mosquito (Anopheles sinensis), Anopheles gambiae, Anopheles minimus, Anopheles stephensi, and Anopheles albimanus;
Chironomidae,
Muscidae including house fly (Musca domestica) and false stable fly (Muscina stabulans);
Calliphoridae;
Sarcophagidae;
Anthomyiidae including Fannia spp.;
Agromyza oryzae;
Drosophilidae;
Phoridae including Megaselia spiracularis;
Psychodidae including Clogmia albipunctata;
Simulidae;
Tabanidae includingTabanus trigonus;
Stomoxys calcitrans,
and the like.

Acarina:

Amblyomma spp. such as lone star tick (Amblyomma americanum), and gulf coast tick (Ambryomma maculatum),
Boophilus spp. such as Boophilus microplus, Boophilus annulatus), Dermacentor spp. such as American dog tick (Dermacentor variabilis), Dermacentor taiwanicus, and Dermacentor andersoni,
Haemaphysalis spp. such as Haemaphysalis longicornis, Haemaphysalis flava, and Haemaphysalis campanulata,
Ixodes spp. such as Ixodes ovatus, Ixodes persulcatus, black-legged tick (Ixodes scapularis), Ixodes pacificus, and Ixodes holocyclus, Rhipicephalus spp. such as brown dog tick (Rhipicephalus sanguineus), and Rhipicephalus appendiculatus, Argas spp. such as fowl tick (Argas persicus),
Ornithodorus spp. such as Ornithodorus hermsi, and Ornithodorus turicata,
Psoroptes spp. such as sheep scab mite (Psoroptes ovis), and horse psoroptic mange mite (Psoroptes equi),
Knemidocoptes spp. such as Knemidocoptes mutans,
Notoedres spp. such as Notoedres cati, Notoedres muris, Sarcoptes spp. such as itch mite (Sarcoptes scabiei),
Otodectes spp. such as mange mite (Otodectes cynotis), Listrophorus spp. such as Listrophorus gibbus,
Chorioptes spp.,
Hypodectes spp.,
Pterolichus spp.,
Cytodites spp.,
Laminosioptes spp.,
Dermanyssus spp. such as bird mite (Dermanyssus gallinae), Ornithonyssus spp. such as feather mite (Ornithonyssus sylviarum), and tropical rat mite (Ornithonyssus bacoti), Varroa spp. such as Varroa jacobsoni,

Cheyletiella spp. such as Cheyletiella yasguri, and Cheyletiella blakei,
Ornithocheyletia spp.,
Demodex spp. such as dog follicle mite (Demodex canis), and cat follicle mite (Demodex cati),
Myobia spp.,
Psorergates spp.,
Trombicula spp. such as Trombicula akamushi, Trombicula pallida, and Trombicula scutellaris;
and the like.

The target harmful insects and mites for Present composition may be insects and mites having reduced agent-sensitivity to or developed agent-resistance to insecticide, and a miticide.

Present composition may be also used to protect an animal from an animal disease caused by insect-borne viruses.

Examples of the animal diseases caused by insect-borne viruses on which the Present composition has control efficacies include, for example followings.

Enzootic encephalitis, Vesicular stomatitis, Rift Valley fever, bluetongue, Akabane disease, Chuzan disease, Lumpy skin disease, Bovine leukosis, Aino virus infection, Ibaraki disease, Bovine ephemeral fever, Nairobi sheep disease, Sheep pox, Goat pox, Equine infectious anemia, African horse sickness, Fowl pox, Myxomatosis, and the like.

Present composition may be also used to protect an animal from an animal disease caused by insect-borne bacteria, rickettsia, spirochaete, or fungus.

Examples of the animal diseases caused by the insect-borne bacteria, rickettsia, spirochaete or fungus on which the Present composition has control efficacies include, for example the followings:

Tularemia, Anaplasmosis, Rickettsiosis, Ehrlichiosis, Lyme disease, Pseudofarcy in horses, and the like.

Some of the pests which can be controlled by the composition of the present invention may inflict pain or discomfort by parasitizing an animal, or infect an animal by an infectious pathogen carried by them, and examples thereof include, for example, a tick, a mite, a louse, a fly and a flea. The composition of the present invention can be administered to a parasitized animal to control these pests.

Examples of the animal to be administered with the composition of the present invention include a homoiotherm or a poikilotherm which is bred as a livestock or a pet. Examples of the homoiotherm include as a mammal a cow, a buffalo, a sheep, a goat, a pig, a camel, a deer, a fallow deer, a reindeer, a horse, an ass, a dog, a cat, a rabbit, a ferret, a mouse, a rat, a hamster, a squirrel, a monkey, and the others, and include further as a fur animal, a mink, a chinchilla, a raccoon, and the others, and include as a bird, a chicken, a goose, a turkey, a duck, a pigeon, a parrot, and a quail and the others. Examples of the poikilotherm include as a reptiles, a tortoise, a sea turtle, a green turtle, a squirtle, a lizard, an iguana, a chameleon, a gecko, a python, a colubrid snake, a cobra and the others, and include as a fish, a freshwater fish and a saltwater fish such as a trout, a carp, and an eel, and the others. Among the above-mentioned animals, particularly, a cow, a horse, a pig, a sheep, a goat a chicken, a dog and a cat are preferably included.

An administration of an effective amount of the composition of the present invention to an animal can control an external parasite therapeutically, suppressively, prophylactically, or protectively. The composition of the present invention can exert a systemic parasitism suppression or a non-systemic parasitism suppression of an external parasite, and can be applied to all or a part of the developmental stage of an external parasite.

When an animal is controlled from an external parasite by administering an effective amount of the composition of the present invention, the composition of the present invention may be mixed with the present compound and the present ingredient only or may be further contained by an inert carrier. Usually, the composition of the present invention may be formulated by mixing the present compound and the present ingredient with an inert carrier such as a solid carrier, a liquid carrier, a gaseous carrier, and as needed, adding with an auxiliary agent for formulation such as a surfactant, an adhesive, a dispersant, a stabilizer and the others.

When an effective amount of the composition of the present inventon is administered to an animal, usualy the composition of the present invention is used as a formulation such as a liquid formulation, and the others, and preferably, can be used as a formulation such as an oral formulation, a skin external preparation and an injectable formulation. A ratio of the present compound and the present ingredient in total may depend on the formulation form, and include a range of usually 0.1 to 100 weight %, preferably 10 to 100 weight %, and more preferably 30 to 100 weight % in these formulations.

When an effective amount of the composition of the present invention is administered to an animal, the composition of the present invention can be administering to a host animal orally or parenterally. Examples of the oral administration method include a method in which the composition of the present invention is administered as an oral formulation to an animal. Examples of the parenteral administration include a method in which the composition of the present invention is administered as a resign formulation which is formulated into a suitable shape such as a skin external preparation, an injectable formulation, a suppository, an implantable formulation, a collar, and an ear tag.

(1) Oral administration method

When the composition of the present invention is administered as an oral formulation to an animal, it can be used as a form of a liquid formulation such as an emulsion, an oil, an oily liquid formulation, an aqueous liquid formulation, a solution and a suspension, a gel, a powder, a granule, a paste formulation, a tablet, a chewable tablet, a soft chewable tablet, a bolus, a capsule, an animal premix, and a syrup. The soft chewable tablet refers to, for exmaple, any chewable table that is formulated to be soft (such as Nexgard (manufactured by Merial Inc.)

(2) Parenteral administration method

(a) Skin external administration method

When the composition of the present invention is administered as a skin external preparation to an animal, it can be used as a liquid formulation such as an emulsion, an oil, an oily liquid formulation, an aqueous liquid formulation, a solution, a shampoo and a suspension, a powder, a cream, an ointment, an aerosol, a sheet formulation, and can be administered by a soaking, a spraying, an application, a bathing, a washing, a rubbing, or a sparging as an emulsion, an oil, an oily liquid formulation, an aqueous liquid formulation, a solution and a suspension, a gel, a powder, a granule, a paste formulation, a tablet, a chewable tablet, a soft chewable tablet, a bolus, a capsule, an animal premix, and a syrup. Preferred examples of the administration method include a spot-on treatment and a pour-on treatment. The spot-on treatment refers to a method in which a liquid formulation is dropped or applied to a neck or a skin of scapular region of back in a host animal, and the pour-on treatment refers to usually a method of pouring a liquid formulation along a mid-dorsal line of a host animal body.

(b) Injectable administration method

When the composition of the present invention is administered to an animal as an injectable formulation, it can be administered by an intraruminal injection, an intramuscular injection, an intravenous injection, or a subcutaneous injection.

(C) Other administration method

The composition of the present invention can be administered as a resign formulation which is formulated into a suitable shape such as a suppository, an implantable formulation, a collar, and an ear tag.

The administered amount of the composition of the present invention may be varied depending on an animal to be subjected or an external parasite to be controlled, and is within a range of usually 1 to 5000 mg, preferably 10 to 1000 mg, and more preferably 50 to 500 mg as opposed to 1 kg of live body weight of the animal to be subjected.

Examples of a solvent for a liquid formulation include any pharmacologically acceptable solvent in a pharmaceutical field.

Examples of the solvents include acetone, dichloromethane, glycofurol, acetonitrile, butyl ether, monomethylacetamide, dipropylene glycol monomethyl ether, diethyl phthalate, aliphatic acid ester (such as diethyl ester thereof or diisobutyl adipate), water, benzyl benzoate, dipropylene glycol monomethyl ether, diethylene glycol monobutyl ether, silicone, and 2,2-dimethyl-4-oxo-methylene-1,3-dioxolane. More specific examples thereof include N,N-dimethyl alkaneamide (such as N,N-dimethylformamide), limonene, eucalyptus, dimethyl sulfoxide, N-alkylpyrrolidone (such as N-methyl pyrrolidone), liquid polyethylene glycol, methylene glycol, ethylene glycol, propylene glycol, dipropylene glycol, polypropylene glycol, butyl diglycol, dipropylene glycol, propylene carbonate, butylene carbonate, paraffin (such as white mineral oil, normal paraffin, isoparaffin), alkylbenzene, alkylnaphthalene, glycerin, sorbitol, triacetin, aromatic hydrocarbon, aliphatic hydrocarbon, alkylbenzene, alkylnaphthalene, ketone (such as methyl ethyl ketone, cyclohexanone, 2-heptanone, isophorone, and 4-hydroxy-2-pentanone), acetate (such as ethyl acetate, benzyl acetate, isoamyl acetate, hexyl acetate, heptyl acetate, octyl acetate, nonyl acetate, tridecyl acetate, and isobormyl acetate), other esters (such as alkylated lactate, bibasic acid ester, and $\gamma$-butyrolactone), and alcohol (which may be straight chain, branched chain, saturate, or unsaturated) (such as phenylethyl alcohol, methanol, ethanol, propanol, isopropyl alcohol, butanol, isobutyl alcohol, hexanol, 2-ethylhexanol, octanol, decanol, isodecyl alcohol, isooctadecyl alcohol, cetyl alcohol, lauryl alcohol, tridecyl alcohol, oleyl alcohol, cyclohexanol, tetrahydrofurfuryl alcohol, diacetone alcohol, and benzyl alcohol), and the others.

Also, examples of the solvents include saturated or unsaturated aliphatic acid (typically, C6 to C22), for example, plant seed oil and fruit oil (such as olive oil, castor oil, linseed oil, sesame oil, corn oil, peanut oil, sunflower oil, grapeseed oil, safflower oil, cotton oil, soybean oil, rapeseed oil, coconut oil, and palm kernel oil), and mixture thereof (such as glycerol ester of polyethoxylated castor oil). Also examples of the solvents include alkylated aliphatic acid (such as

methylated-, ethylated-, butylated- aliphatic acid), and the aliphatic acid can be obtained by hydrolysis of glycero ester derived from plant sources and animal sources, and may be purified by a distillation.

The composition of the present invention may comprise as needed an adjuvant (such as a co-solvent, a surfactant, a silicone oil, an antioxidant, a colorant, a photostabilizer and an adhesive).

Examples of adjuvant in the composition of the present invention include propylene carbonate, silicone oil, triglyceride, surfactant, and mixture of two or more thereof.

For surfactant in the composition of the present invention, examples of nonionic surfactant include sorbitan aliphatic acid ester (such as sorbitan stearate, and sorbitan oleate), glycerin aliphatic acid ester (such as glyceryl stearate, glyceryl isostearate, glyceryl oleate, polyglyceryl stearate, polyglyceryl isostearate, and polyglyceryl oleate), polyoxyethylene alkyl ether (such as polyoxyethylene lauryl ether, polyoxyethylene cetyl ether, polyoxyethylene stearyl ether, polyoxyethylene oleyl ether, polyoxyethylene styryl phenyl ether), polyoxyethylene sorbitan aliphatic acid ester (such as coconut oil fatty acid polyoxyethylene sorbitan, oleic acid polyoxyethylene sorbitan, stearic acid polyoxyethylene sorbitan), polyoxyethylene sorbit aliphatic acid ester (such as tetraoleic acid polyoxyethylene sorbit), and others (such as polyoxyethylene hydrogenated castor oil, and alkyl phenol polyglycol ether). Examples of the amphoteric surfactant include betaine (such as lauryl betaine, and stearyl betaine), imidazolidine derivatives (such as di-sodium N-lauryl-p-iminodipropionate), and others (such as lecithin). Examples of anionic surfactant include alkyl sulfates (such as sodium lauryl sulfate, and lauryl sulfate triethanolamine), polyoxyethylene alkyl ether sulfate salt (such as sodium polyoxyethylene lauryl ether sulfate, and polyoxyethylene lauryl ether sulfate triethanolamine), alkyl benzene sulfonate salts (such as sodium dodecylbenzene sulfonate), polyoxyethylene alkyl ether phosphate (such as sodium dipolyoxyethylene lauryl ether phosphate, sodium, and dipolyoxyethylene oleyl ether phosphate). Examples of cationic surfactant include alkyl ammonium salts (such as cetyltrimethyl ammonium chloride, and distearyl dimethyl ammonium chloride).

Examples of the silicone oil include dimethyl silicone oil, highly polymerized dimethyl silicone oil, cyclic silicone oil, polyether-modified silicone oil, amino-modified silicone oil, and methyl phenyl silicone oil.

Examples of the antioxidant include dibutyl hydroxy toluene (hereinafter, referred to as BHT), BHA and the others, and examples of colorant include edible tar dynes (such as Red No. 2 (Amaranthus), Red No. 3 (Erythrosine), Yellow No. 4 (Tartrazine), Green No. 3 (Fast Green FCF), and Blue No. 1 (Brilliant Blue FCF)), and examples of the photostabilizer include benzophenone compound and the like, and examples of adhesive include bentonite, colloidal silicic acid, cellulose derivatives, starch derivatives, polyacrylate, natural polymer, alginates, and gelatin and the others.

The composition of the present invention may be formulated into a sustained release preparation. Examples of the sustained release preparation include products which are molded with microcapsules which are prepared by a underwater drying method (such as, o / w method, w / o / w method), a phase separation method, a spray drying method or similar methods thereto (such as microsphere, microcapsule, and microparticle), biocompatible polymer (such as polylactic acid, and a copolymer of lactic acid and glycol), collagen, gelatin, and silicone.

A method for controlling pests of the present invention (hereinafter, referred to as "method of the present invention" or "Present method") comprises a step of applying an effective amount of the composition of the present invention to pests or habitat where the pests lives (such as plants, soil, indoor, and animal body).

When the composition of the present invention is used for controlling pests in agricultural field, the application dose is within a range of usually 1 to 10000 g on the basis of the amount of the compound of the present invention per 10000 $m^2$. Also, when the composition of the present invention is used to control a pest which lives in a house or an animal, in the case of using it on a planar area, the application dose as an amount of the present compound is usually within a range of 0.01 to 1000 mg per 1$m^2$ of an area to be treated, and in the case of using it spatially, the application dose as an amount of the present compound is usually within a range from 0.01 to 500 mg per 1 $m^3$ of the space to be treated.

In the control method of the present invention, the mixed ratio (the weight ratio) of the present compound and the present ingredient may be varied depending on a kind of an animal to be protected, a kind or a frequency of occurrence of a pest to be controlled, a formulation form, an application period, an application method, and an application site, and the others, the present compound / the present ingredient is within a range of usually 1/1000 to 1000/1, preferably 1/100 to 100/1, more preferably 1/25 to 10/1, further preferably 1/12.5 to 5/1, and further more preferably 1/10 to 3/1,

EXAMPLES

Hereinafter, the present invention is explained in more detail by using Formulation Examples, and Test Examples, however, the present invention should not be limited to these examples. Here, the term "part(s)" means part(s) by weight unless otherwise specified.

Next, specific examples of the composition of the present invention is described below.

Hereinafter, for exmaple, "Present compound 1 / N,N-diethyl-m-toluamide = 1/10" represents the composition of the present invention comprising 1 part of the Present compound and 10 parts of N,N-diethyl-m-toluamide on the basis of part by weight.

"Present compound 3 / N,N-diethyl-m-toluamide = 10/1", "Present compound 3 / N,N-diethyl-m-toluamide = 1/1", "Present compound 3 / N,N-diethyl-m-toluamide= 1/3", "Present compound 9 / N,N-diethyl-m-toluamide = 10/1", "Present compound 9 / N,N-diethyl-m-toluamide = 1/1", "Present compound 9 / N,N-diethyl-m-toluamide= 1/3", "Present compound 12 / N,N-diethyl-m-toluamide= 10/1" , "Present compound 12 / N,N-diethyl-m-toluamide= 1/1", "Present compound 12 / N,N-diethyl-m-toluamide= 1/3", "Present compound 18 / N,N-diethyl-m-toluamide= 10/1", "Present compound 18 / N,N-diethyl-m-toluamide= 1/1", "Present compound 18 / N,N-diethyl-m-toluamide= 1/3", "Present compound 30 / N,N-diethyl-m-toluamide= 10/1", "Present compound 30 / N,N-diethyl-m-toluamide= 1/1", "Present compound 30 / N,N-diethyl-m-toluamide= 1/3", "Present compound 45 / N,N-diethyl-m-toluamide= 10/1", "Present compound 45 / N,N-diethyl-m-toluamide= 1/1", "Present compound 45 / N,N-diethyl-m-toluamide= 1/3", "Present compound 57 / N,N-diethyl-m-toluamide= 10/1", "Present compound 57 / N,N-diethyl-m-toluamide= 1/1", "Present compound 57 / N,N-diethyl-m-toluamide= 1/3", "Present compound 81 / N,N-diethyl-m-toluamide= 10/1", "Present compound 81 / N,N-diethyl-m-toluamide= 1/1", "Present compound 81 / N,N-diethyl-m-toluamide= 1/3", "Present compound 93 / N,N-diethyl-m-toluamide= 10/1", "Present compound 93 / N,N-diethyl-m-toluamide= 1/1", "Present compound 93 / N,N-diethyl-m-toluamide= 1/3", "Present compound 135 / N,N-diethyl-m-toluamide= 10/1", "Present compound 135 / N,N-diethyl-m-toluamide= 1/1", "Present compound 135 / N,N-diethyl-m-toluamide= 1/3", "Present compound 147 / N,N-diethyl-m-toluamide= 10/1", "Present compound 147 / N,N-diethyl-m-toluamide= 1/1", "Present compound 147 / N,N-diethyl-m-toluamide= 1/3", "Present compound 3 / sec-butyl = 2-(2-hydroxyethyl)piperidine-1-carboxylate = 10/1", "Present compound 3 / sec-butyl = 2-(2-hydroxyethyl)piperidine-1-carboxylate = 1/1", "Present compound 3 / sec-butyl = 2-(2-hydroxyethyl)piperidine-1-carboxylate = 1/3", "Present compound 9 / sec-butyl = 2-(2-hydroxyethyl)piperidine-1-carboxylate = 10/1", "Present compound 9 / sec-butyl = 2-(2-hydroxyethyl)piperidine-1-carboxylate = 1/1", "Present compound 9 / sec-butyl = 2-(2-hydroxyethyl)piperidine-1-carboxylate = 1/3" , "Present compound 12 / sec-butyl = 2-(2-hydroxyethyl)piperidine-1-carboxylate = 10/1", "Present compound 12 / sec-butyl = 2-(2-hydroxyethyl)piperidine-1-carboxylate = 1/1", "Present compound 12 / sec-butyl = 2-(2-hydroxyethyl)piperidine-1-carboxylate = 1/3", "Present compound 18 / sec-butyl = 2-(2-hydroxyethyl)piperidine-1-carboxylate = 10/1", "Present compound 18 / sec-butyl = 2-(2-hydroxyethyl)piperidine-1-carboxylate = 1/1", "Present compound 18 / sec-butyl = 2-(2-hydroxyethyl)piperidine-1-carboxylate = 1/3", "Present compound 30 / sec-butyl = 2-(2-hydroxyethyl)piperidine-1-carboxylate = 10/1", "Present compound 30 / sec-butyl = 2-(2-hydroxyethyl)piperidine-1-carboxylate = 1/1", "Present compound 30 / sec-butyl = 2-(2-hydroxyethyl)piperidine-1-carboxylate = 1/3", "Present compound 45 / sec-butyl = 2-(2-hydroxyethyl)piperidine-1-carboxylate = 10/1", "Present compound 45 / sec-butyl = 2-(2-hydroxyethyl)piperidine-1-carboxylate = 1/1", "Present compound 45 / sec-butyl = 2-(2-hydroxyethyl)piperidine-1-carboxylate = 1/3", "Present compound 57 / sec-butyl = 2-(2-hydroxyethyl)piperidine-1-carboxylate = 10/1", "Present compound 57 / sec-butyl = 2-(2-hydroxyethyl)piperidine-1-carboxylate = 1/1", "Present compound 57 / sec-butyl = 2-(2-hydroxyethyl)piperidine-1-carboxylate = 1/3", "Present compound 81 / sec-butyl = 2-(2-hydroxyethyl)piperidine-1-carboxylate = 10/1", "Present compound 81 / sec-butyl = 2-(2-hydroxyethyl)piperidine-1-carboxylate = 1/1", "Present compound 81 / sec-butyl = 2-(2-hydroxyethyl)piperidine-1-carboxylate = 1/3", "Present compound 93 / sec-butyl = 2-(2-hydroxyethyl)piperidine-1-carboxylate = 10/1", "Present compound 93 / sec-butyl = 2-(2-hydroxyethyl)piperidine-1-carboxylate = 1/1", "Present compound 93 / sec-butyl = 2-(2-hydroxyethyl)piperidine-1-carboxylate = 1/3", "Present compound 135 / sec-butyl = 2-(2-hydroxyethyl)piperidine-1-carboxylate = 10/1", "Present compound 135 / sec-butyl = 2-(2-hydroxyethyl)piperidine-1-carboxylate = 1/1", "Present compound 135 / sec-butyl = 2-(2-hydroxyethyl)piperidine-1-carboxylate = 1/3", "Present compound 147 / sec-butyl = 2-(2-hydroxyethyl)piperidine-1-carboxylate = 10/1", "Present compound 147 / sec-butyl = 2-(2-hydroxyethyl)piperidine-1-carboxylate = 1/1", "Present compound 147 / sec-butyl = 2-(2-hydroxyethyl)piperidine-1-carboxylate = 1/3".

Next, Formulation Examples of the composition of the present invention are described.

Formulation Example 1

A suitable amount of diethylene glycol monoethyl ether is added to 5 parts of any one of Present compounds 1 to 150 and 1 part of any one of Present ingredients to make a total amount of the mixture 100 parts, and obtain liquid formulation A.

Formulation Example 2

Five(5) parts of N-octylpyrrolidone, and a suitable amount of N-methylpyrrolidone are added to 5 parts of any one of Present compounds 1 to 150 and 1 part of any one of Present ingredients to make a total amount of the mixture 100 parts, and obtain liquid formulation B.

Formulation Example 3

Seven(7) parts of dimethylformamide and a suitable amount of Macrogol 400 are added to 0.4 parts of any one

of Present compounds 1 to 150 and 0.2 parts of any one of the present ingredients to make a total amount of the mixture 100 parts, and obtain 100 parts of liquid formulation C.

Formulation Example 4

Seven(7) parts of dimethylformamide and a suitable amount of propylene carbonate are added to 0.2 parts of any one of Present compounds 1 to 150 and 0.4 parts of any one of Present ingredients to make a total amount of the mixture 100 parts, and obtain liquid formulation D.

Formulation Example 5

Twenty(20) parts of cornstarch, 4.5 parts of flavor, 0.5 parts of aspartame, 2 parts of magnesium stearate, 5 parts of Macrogol 3350, 5 parts of glycerin, 5 parts of sodium lauryl sulfate, 1 part of pamoate hydrochloride, 6 parts of soybean oil, and a suitable amount of sucrose are added 15 parts of any one of Present compounds 1 to 150 and 5 parts of any one of Present ingredients to make a total amount of the mixture 100 parts, and obtain tablet A.

Formulation Example 6

Six(6) parts of Macrogol 400, 20 parts of Macrogol 4000, 2 parts of Macrogol 15 hydroxystearate, 4 parts of glycerin, 5 parts of povidone, 5 parts of soybean protein, 13 parts of medium chain tri-glyceride, 10 parts of flavor, and a suitable amount of cornstarch are added to 2 parts of any one of Present compounds 1 to 150 and 6 parts of any one of Present ingredients to make a total amount of the mixture 100 parts and obtain soft chewable tablet A.

Formulation Example 7

Ten(10) parts of triethyl phosphate, 15 parts of isodecyl adipate, 2.3 parts of isostearic acid, 2.5 parts of erucic acid, 2.3 parts of epoxidized soybean oil, and 1.1 part of barium / zinc liquid stabilizer are mixed with 2 parts of any one of Present compounds 1 to 150 and 8 parts of any one of Present ingredients at room temperature, and starred to prepare a homogeneous mixed solution. Next, 0.2 parts of barium stearate, and a suitable amount of vinyl chloride resin are installed into a kneading machine which is kept at about 170°C, and to the resulting mixture is added the above mixed solution gradually, and thereafter, the resulting mixture is further kneaded for 3 minutes to obtain resin composition A.

Formulation Example 8

The resin composition A which is prepared by the Formulation Exmaple 7 is formulated with a press machine which is kept at about 180°C into a sheet-shaped molded materials, and the obtained sheet-shaped molded materials are pelletized with a sheet pelletizer. The obtained pellet is subjected to an injection molding at 180°C as a molding temperature to obtain molded materials with animal collars-like shape (collars formulation A).

Formulation Example 9

Forty(40) parts of 25% aqueous sodium polyoxyethylene lauryl ether sulfate solution, 5 parts of lauric acid amidopropyl betaine, 5 parts of coconut diethanolamide, 5 parts of carboxyvinyl polymer, and a suitable amount of purified water are added to 0.1 parts of any one of Present compounds 1 to 150 and 0.01 parts of any one of Present ingredients to make a total amount of the mixture 100 parts, and the mixture is mixed suitably to obtain shampoo formulation A.

Hereinafter, an effect of the present invention is shown in Test Examples.

Test Exmaple 1

The liquid formulation A which is obtained in Formulation Exmaple 1 is dropped to a dog to obtain high control effect on ticks such as Amblyomma genus, Dermacentor genus, Haemaphysalis genus, Ixodes genus, and Rhipicephalus genus, and fleas such as Pulex genus and Ctenocephalides genus.

Test Example 2

The soft chewable tablet A which is obtained in Formulation Example 6 is administered orally to a dog to obtain

high control effect on ticks such as Amblyomma genus, Dermacentor genus, Haemaphysalis genus, Ixodes genus, and Rhipicephalus genus, and fleas such as Pulex genus and Ctenocephalides genus.

Test Example 3

The liquid formulation C which is obtained in Formulation Example 3 is subjected to a filter sterilization, and is administered subcutaneously to a dog to obtain a high control effect on ticks such as Amblyomma genus, Dermacentor genus, Haemaphysalis genus, Ixodes genus, and Rhipicephalus genus, and fleas such as Pulex genus and Ctenocephalides genus.

Test Exmaple 4

The collar formulation A which is obtained in Formulation Example 8 is weared on neck of a dog to obtain a high control effect on ticks such as Amblyomma genus, Dermacentor genus, Haemaphysalis genus, Ixodes genus, and Rhipicephalus genus, and fleas such as Pulex genus and Ctenocephalides genus.

Test Example 5

A skin of a dog is washed with the shampoo formulation A which is obtained in Formulation Example 9 to obtain a high control effect on ticks such as Amblyomma genus, Dermacentor genus, Haemaphysalis genus, Ixodes genus, and Rhipicephalus genus, and fleas such as Pulex genus and Ctenocephalides genus.

Test Example 6

The liquid formulation A which is obtained in Formulation Example 1 is dropped to a cat to obtain high control effect on ticks such as Amblyomma genus, Dermacentor genus, Haemaphysalis genus, Ixodes genus, and Rhipicephalus genus, and fleas such as Pulex genus and Ctenocephalides genus.

Test Example 7

The soft chewable tablet A which is obtained in Formulation Example 6 is administered orally to a cat to obtain high control effect on ticks such as Amblyomma genus, Dermacentor genus, Haemaphysalis genus, Ixodes genus, and Rhipicephalus genus, and fleas such as Pulex genus and Ctenocephalides genus.

Test Exmaple 8

The liquid formulation C which is obtained in Formulation Example 3 is subjected to a filter sterilization, and is administered subcutaneously to a cat to obtain a high control effect on ticks such as Amblyomma genus, Dermacentor genus, Haemaphysalis genus, Ixodes genus, and Rhipicephalus genus, and fleas such as Pulex genus and Ctenocephalides genus.

Test Example 9

The collar formulation A which is obtained in Formulation Example 8 is weared on neck of a dog to obtain a high control effect on ticks such as Amblyomma genus, Dermacentor genus, Haemaphysalis genus, Ixodes genus, and Rhipicephalus genus, and fleas such as Pulex genus and Ctenocephalides genus.

Test Example 10

A skin of a cat is washed with the shampoo formulation A which is obtained in Formulation Example 9 to obtain a high control effect on ticks such as Amblyomma genus, Dermacentor genus, Haemaphysalis genus, Ixodes genus, and Rhipicephalus genus, and fleas such as Pulex genus and Ctenocephalides genus.

Also, it is specifically described that the composition of the present invention has an effect of controlling pests.

The excellent pesticidal effect of the composition of the present invention can be confirmed by the below-mentioned Test Examples. In the case where each of the active compound shows some degree of pesticidal effect, when a combined use thereof shows higher pesticidal effect over a mere total of each pesticidal efficacy of the respective active compound, a synergistic effect can be recognized.

A pesticidal effect to be expected by a combination of the respective active compound can be calculated by a

Colby equation. The Colby's calculation equation is shown as Equation 1 below.

(Equation 1)

$$E = X + Y - X \times Y / 100$$

where

X represents a mortality expressed as a percentage in the case where the present compound (for example, a concentration of m mg / m$^2$) is used,
Y represents a mortality expressed as a percentage in the case where N,N-diethyl-m-toluamide or sec-butyl = 2-(2-hydroxyethyl)piperidine-1-carboxylate (for example, each concentration of n mg / m$^2$) is used, and,
E represents a mortality expressed (Expected value) as a percentage in the case where the present compound (for example, a concentration of n mg / m$^2$), N,N-diethyl-m-toluamide or sec-butyl = 2-(2-hydroxyethyl)piperidine-1-carboxylate (for example, each concentration of n mg / m$^2$) is mixed and used in combination).

In the case where the mortality as an actual measured value of the composition of the present invention is higher than the calculated value (E) (Expected value) which is calculated by the Colby's calculation equation, it means that a pesticidal effect of the combination shows a synergistic effect.
Next, an evident in which the pesticidal effect of the composition of the present invention shows a synergistic effect is specifically described by Test Examples.

Test Example 11

To an acetone solution containing a prescribed amount of the Present compound 3 was added an acetone solution containing each prescribed amount of N,N-diethyl-m-toluamide or sec-butyl = 2-(2-hydroxyethyl)piperidine-1-carboxylate. Zero point two (0.2) mL of the solution was dropped to a 20 mL volume of vial, and the inner wall of the vial was coated homogeneously with the chemicals, and air-dried. Thereafter, ten ticks were released in the vial, and the vials were sealed with a lid. After 48 hours, the number of died ticks were examined, and the mortality (%) was calculated by the following equation 2. The three repetitions of each application dose were conducted. The mortality (%) of an experimental value which was obtained by the test, and the mortality (%) of a calculated value which was calculated by the Colby's equation are shown in Table 4.

(Equation 2)

$$\text{Mortality (\%)} = (\text{Number of dead pests} / \text{Number of supplied pests}) \times 100$$

[Table 4]

| Present compound 3 (mg/m$^2$) | N,N-diethyl-m-toluamide (mg/m$^2$) | sec-butyl=2-(2-hydroxyethyl)piperidine-1-carboxylate thereof (mg/m$^2$) | Mortality (Measured value) | Mortality (Expected value) |
|---|---|---|---|---|
| 0.8 | 10 | 0 | 100 | 46 |
| 0.8 | 0 | 10 | 100 | 73 |
| 0.8 | 0 | 0 | 10 | |
| 0 | 10 | 0 | 40 | |
| 0 | 0 | 10 | 70 | |

In the case where the same procedures as those of the treatment group except that N,N-diethyl-m-toluamide or sec-butyl = 2-(2-hydroxyethyl)piperidine-1-carboxylate weren't used, the mortality showed 0%.

In the both cases of the treatment groups where each of the combination of the present compound 3 and N,N-diethyl-m-toluamide or the present compound 3 and sec-butyl = 2-(2-hydroxyethyl)piperidine-1-carboxylate was used, the synergistic effects were recognized.

Test Example 12

To an acetone solution containing a prescribed weight amount of any one of the present compounds 1 to 150 is added an acetone solution containing each of a prescribed weight amount of N,N-diethyl-m-toluamide or sec-butyl = 2-(2-hydroxyethyl)piperidine-1-carboxylate. Zero point two (0.2) mL of the solution is dropped to a 20 mL volume of vial, and the inner wall of the vial is coated homogeneously with the chemicals, and air-dried. Thereafter, ten cat fleas having a resistance to fipronil are released in the vial, and the vials are sealed with a lid. After 48 hours, the number of died cat fleas are examined, and the mortality (%) is calculated by the following equation 3. As a result, a high mortality against ten cat fleas having a resistance to fipronil is obtained.

(Equation 3)

Mortality (%) = (Number of dead pests / Number of supplied pests) × 100

Test Example 13

To an acetone solution containing a prescribed amount of any one of the present compounds 1 to 150 is added an acetone solution containing each prescribed amount of N,N-diethyl-m-toluamide or sec-butyl = 2-(2-hydroxyethyl)piperidine-1-carboxylate. Zero point two (0.2) mL of the solution is dropped to a 20 mL volume of a vial, and the inner wall of the vial is coated homogeneously with the chemicals, and air-dried. Thereafter, ten cat fleas having a resistance to pyrethroid are released in the vial, and the vials are sealed with a lid. After 48 hours, the number of died cat fleas are examined, and the mortality (%) is calculated by the following equation 4. As a result, a high mortality against ten cat fleas having a resistance to pyrethroid is obtained.

(Equation 4)

Mortality (%) = (Number of dead pests / Number of supplied pests) × 100

Test Example 14

To an acetone solution containing a prescribed amount of the present compound 93 was added an acetone solution containing each prescribed amount of N,N-diethyl-m-toluamide and sec-butyl = 2-(2-hydroxyethyl)piperidine-1-carboxylate. Zero point two (0.2) mL of the solution was dropped to a 20 mL volume of a vial, and the inner wall of the vial was coated homogeneously with the chemicals, and air-dried. Thereafter, ten ticks were released in the vial, and the vials were sealed with a lid. After 48 hours, the number of died ticks were examined, and the mortality (%) was calculated by the following equation 5. The three repetitions of each application dose were conducted. The mortality (%) of an experimental value which was obtained by the test, and the mortality (%) of a calculated value which was calculated by the Colby's equation are shown in Table 5.

(Equation 5)

Mortality (%) = (Number of dead pests / Number of supplied pests) × 100

[Table 5]

| Present compoun d 93 (mg/m2) | N,N-diethyl-m-toluamid e (mg/m2) | sec-butyl=2-(2-hydroxyethyl)piperidi ne-1-carboxylate thereof (mg/m2) | Mortali ty (Measur ed value) | Mortali ty (Expect ed value) |
|---|---|---|---|---|
| 0.8 | 20 | 0 | 100 | 60 |
| 0.8 | 0 | 10 | 100 | 76 |
| 0.8 | 0 | 0 | 20 | |
| 0 | 20 | 0 | 50 | |
| 0 | 0 | 10 | 70 | |

Test Example 15

To an acetone solution containing each of the prescribed amount of the present compound 9, 18 or 45 was added an acetone solution containing each of the prescribed amount of N,N-diethyl-m-toluamide or sec-butyl = 2-(2-hydroxyethyl)piperidine-1-carboxylate. Zero point two (0.2) mL of the solution was dropped to a 20 mL volume of a vial, and the inner wall of the vial was coated homogeneously with the chemicals, and air-dried. Thereafter, ten ticks were released in the vial, and the vials were sealed with a lid. After 48 hours, the number of died ticks were examined, and the mortality (%) was calculated by the following equation 6. The three repetitions of each application dose were conducted. The mortality (%) of an experimental value which was obtained by the test are shown in Tables 6 to 8.

(Equation 6)

Mortality (%) = (Number of dead pests / Number of supplied pests) × 100

[Table 6]

| Present compound 9 (mg/m2) | N,N-diethyl-m-toluamide (mg/m2) | sec-butyl=2-(2-hydroxyethyl)piperidi ne-1-carboxylate thereof (mg/m2) | Mortality |
|---|---|---|---|
| 0.8 | 20 | 0 | 100 |
| 100 | 20 | 0 | 100 |
| 0.8 | 0 | 10 | 100 |
| 100 | 0 | 10 | 100 |

[Table 7]

| Present compound 18 (mg/m2) | N,N-diethyl-m-toluamide (mg/m2) | sec-butyl=2-(2-hydroxyethyl)piperidi ne-1-carboxylate thereof (mg/m2) | Mortality |
|---|---|---|---|
| 0.8 | 20 | 0 | 100 |
| 100 | 20 | 0 | 100 |
| 0.8 | 0 | 10 | 100 |
| 100 | 0 | 10 | 100 |

[Table 8]

| Present compound 45 ($mg/m^2$) | N,N-diethyl-m-toluamide ($mg/m^2$) | sec-butyl=2-(2-hydroxyethyl)piperidi ne-1-carboxylate thereof ($mg/m^2$) | Mortality |
|---|---|---|---|
| 0.8 | 20 | 0 | 100 |
| 100 | 20 | 0 | 100 |
| 0.8 | 0 | 10 | 100 |
| 100 | 0 | 10 | 100 |

The composition of the present invention has an excellent control efficacy on pests.

## Claims

1. A composition for controlling pests comprising a compound represented by formula (1):

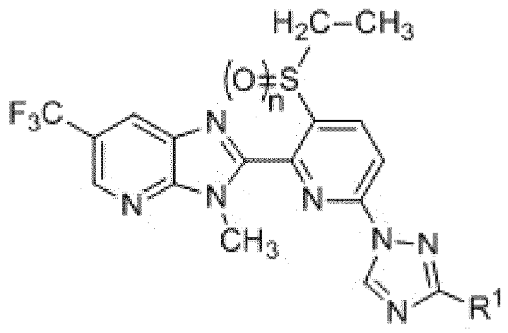

(1)

[wherein

$R^1$ represents a hydrogen atom, a C1-C3 alkyl group which may optionally have one or more halogens, a halogen atom, a C1-C3 alkoxy group, a C2-C4 alkoxycarbonyl group, $S(O)_mR^2$, $NR^3R^4$, a nitro group, or a cyano group,
$R^2$ represents a C1-C3 alkyl group,
$R^3$ and $R^4$ are identical to or different from each other and each represents a hydrogen atom or a C1-C3 alkyl group,
n is 0, 1 or 2, and
m is 0, 1 or 2.]

or its N-oxide and
at least one compound selected from the group of N,N-diethyl-m-toluamide and sec-butyl = 2-(2-hydroxyethyl)pyridine-1-carboxylate.

2. The composition according to claim 1 wherein $R^1$ represents a hydrogen atom, a C1-C3 alkyl group, a halogen atom, a C1-C3 alkoxy group, or $NR^3R^4$, and n is 2.

3. The composition according to claim 1 wherein $R^1$ represents a hydrogen atom, a methyl group, a chlorine atom, a methoxy group, or an amino group, and n is 2.

4. The composition according to claim 1 wherein the content ratio of the compound represented by formula (1) and its N-oxide to at least one compound selected from N,N-diethyl-m-toluamide and sec-butyl = 2-(2-hydroxyethyl)piperidine-1-carboxylate is 100 : 1 to 1 : 100 by weight.

5. A method for controlling pests which comprises applying an effective amount of the composition according to claim 4 to a pest or a habitat where a pest lives.

**INTERNATIONAL SEARCH REPORT**

International application No.
PCT/JP2018/047431

A. CLASSIFICATION OF SUBJECT MATTER
Int.Cl. A01N43/90(2006.01)i, A01M1/20(2006.01)i, A01N37/18(2006.01)i, A01N47/16(2006.01)i, A01P7/02(2006.01)i, A01P7/04(2006.01)i, C07D471/04(2006.01)i
According to International Patent Classification (IPC) or to both national classification and IPC

B. FIELDS SEARCHED
Minimum documentation searched (classification system followed by classification symbols)
Int.Cl. A01N43/90, A01M1/20, A01N37/18, A01N47/16, A01P7/02, A01P7/04, C07D471/04

Documentation searched other than minimum documentation to the extent that such documents are included in the fields searched

| | |
|---|---|
| Published examined utility model applications of Japan | 1922-1996 |
| Published unexamined utility model applications of Japan | 1971-2019 |
| Registered utility model specifications of Japan | 1996-2019 |
| Published registered utility model applications of Japan | 1994-2019 |

Electronic data base consulted during the international search (name of data base and, where practicable, search terms used)
CAplus/REGISTRY (STN)

C. DOCUMENTS CONSIDERED TO BE RELEVANT

| Category* | Citation of document, with indication, where appropriate, of the relevant passages | Relevant to claim No. |
|---|---|---|
| Y | JP 2016-102104 A (SUMITOMO CHEMICAL CO., LTD.) 02 June 2016, claims, paragraphs [0005], [0084]-[0089], [0127], [0164]-[0172], [0180]-[0212], production examples 1-11, paragraphs [0268]-[0276], test examples (Family: none) | 1-5 |

☒ Further documents are listed in the continuation of Box C. ☐ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| 26 February 2019 (26.02.2019) | 12 March 2019 (12.03.2019) |

| Name and mailing address of the ISA/ | Authorized officer |
|---|---|
| Japan Patent Office<br>3-4-3, Kasumigaseki, Chiyoda-ku,<br>Tokyo 100-8915, Japan | Telephone No. |

Form PCT/ISA/210 (second sheet) (January 2015)

**INTERNATIONAL SEARCH REPORT**

International application No.
PCT/JP2018/047431

C (Continuation). DOCUMENTS CONSIDERED TO BE RELEVANT

| Category* | Citation of document, with indication, where appropriate, of the relevant passages | Relevant to claim No. |
|---|---|---|
| Y | WO 2015/133603 A1 (SUMITOMO CHEMICAL CO., LTD.) 11 September 2015, claims, paragraphs [0044]-[0047], [0071], [0078], production examples 1-22, test examples, paragraphs [0089]-[0096], production examples & US 2017/0135348 A1, claims, paragraphs [0308]-[0309], [0407], [0416], [0443]-[0511], preparation examples 1-22, formulation examples, test examples & EP 3115363 A1 & AU 2015224876 A & CA 2941452 A & CN 106103433 A & KR 10-2016-0120748 A & MX 2016011292 A & RU 2016139257 A & TW 201623299 A & AR 99677 A | 1-5 |
| Y | JP 2017-515832 A (DOW AGROSCIENCES LLC) 15 June 2017, claims, etc. & US 2015/0327551 A1, claims & WO 2015/175719 A1 & EP 3145312 A1 & UY 36125 A & TW 201623302 A & CA 2948365 A & AU 2015259185 A & IL 248781 D & KR 10-2017-0008753 A & AR 100463 A & CN 107072206 A & NZ 725781 A & RU 2016145145 A | 1-5 |
| Y | JP 2007-524773 A (BASF AG.) 30 August 2007, claims, etc. & US 2005/0132500 A1, claims & WO 2005/064072 A2 & EP 2325385 A1 & AP 2115 A & CN 101309583 A & ZA 200605047 A & AP 3058 A & AT 522654 T & PT 1697578 E & SI 1697578 T & ES 2372820 T & PL 1697578 T & CY 1112676 T & TW 200601968 A & MY 163973 A & PT 2325385 T | 1-5 |
| Y | JP 2007-502860 A (VANDERBILT UNIVERSITY) 15 February 2007, claims, etc. & US 2005/0008714 A1, claims & WO 2004/100971 A1 & EP 2533046 A1 & CA 2523489 A & CN 1809368 A & ZA 200508646 A & RU 2005133393 A & AU 2004238220 A & OA 13160 A & HK 1089086 A | 1-5 |

Form PCT/ISA/210 (continuation of second sheet) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 2017249089 A
- WO 2015198859 A
- WO 2015133603 A
- WO 2015133603 A1